# EUROPEAN PATENT SPECIFICATION

(11) **EP 0 723 328 B1**
(45) Date of publication and mention of the grant of the patent: **10.03.2004**
(21) Application number: 96105545.6
(22) Date of filing: 11.06.1990
(51) Int. Cl.: H02K 7/08, H02K 5/10

(54) **An electric motor**
Elektrischer Motor
Moteur électrique

(30) Priority: 09.06.1989 GB 8913364
(43) Date of publication of application: 24.07.1996
(62) Divisional of application: 90306341.0
(73) Proprietor: Papst Licensing GmbH & Co. KG, 78112 St Georgen (DE)
(72) Inventor: Cap, Heinrich, 7742 St. Georgen 4 (DE); Papst, Georg Friedrich, 7742 St. Georgen (DE); Elsässer, Dieter, 7742 St. Georgen (DE); Koletzki, Ulrich, 7742 St. Georgen (DE)
(74) Representative: Needle, Jacqueline

(56) References cited:
- EP-A- 0 291 295
- DE-A- 2 325 473
- DE-A- 2 645 677
- DE-A- 3 135 385
- DE-A- 3 326 543
- US-A- 4 760 298

## Description

The present invention relates to a hard disc storage drive.

Electric motors for directly driving rotary loads, such as information storage disks require "clean room" conditions. In the market for information storage disk drives, there is a continuing demand for compactness. Previously, this demand has been satisfied by providing drive motors of the external rotor type which could be axially relatively short. Now there is demand for the information storage disks to have ever diminishing diameters so that the apparatuses which hold them can also be compact. At the same time, the motor must still supply adequate torque, have a certain minimum angular momentum and smooth-running operation and inhibit the passage of dirt particles from its bearings and torque-generating regions toward a "clean room" region, all without increasing its overall axial dimension.

US-A-4,760,298 discloses a drive motor for a magnetic disc having a stator fixed to a central shaft carried by a mounting frame. An outer cup-shaped rotor is mounted for rotation about the shaft and the stator. A magnetic disk support is fixed to an outer surface of the rotor.

According to the present invention there is provided a hard disk storage drive incorporating a drive motor having a hub, and one or more information storage disks carried by said hub, the hard disk storage drive having a clean room chamber adjacent the hub in which the information storage disks, and read and recording heads therefor, are housed, the hub having a cylindrical portion which carries at least one information storage disk, with the one or a first disk supported on a flat, radially extending, shoulder of the hub, the drive motor being sealed off from the clean room disk chamber, and the drive motor comprising a shaft defining a central axis and arranged to support said hub for rotation by the motor, and a stator and a rotor defining a cylindrical air gap therebetween, wherein a cup-shaped mounting flange for supporting said stator is arranged coaxially relative to said central axis, said mounting flange having an axially extending recess defined therein, wherein said rotor projects into said recess, and carries an annular permanent magnetic rotor magnet, wherein said air gap defined between said rotor and said stator is axially extending and within said recess, and wherein the stator is supported within said recess, wherein said rotor is contiguous with said hub and the permanent magnetic rotor magnet is located within said recess axially below said flat shoulder of the hub, and wherein seal means are arranged between the hub and the stator.

In an embodiment, the stator carries a winding arranged coaxially relative to said central axis, and the rotor is arranged coaxially relative to said central axis and to be external relative to, and to surround, said stator winding, and wherein said shaft extends axially beyond said mounting flange and is arranged to support said hub for rotation by said rotor. Preferably, the motor has a stationary shaft enabling axial separation of ball bearings therefor. This may lead to a reduction in the diameter of the motor.

Preferably, the drive motor has a cover disc which provides a flawless separation or seal of the mounting of the motor from the clean room chamber.

An embodiment of the present invention will hereinafter be described, by way of example, with reference to the accompanying drawing, in which the sole figure shows a section of half of a drive motor of the invention.

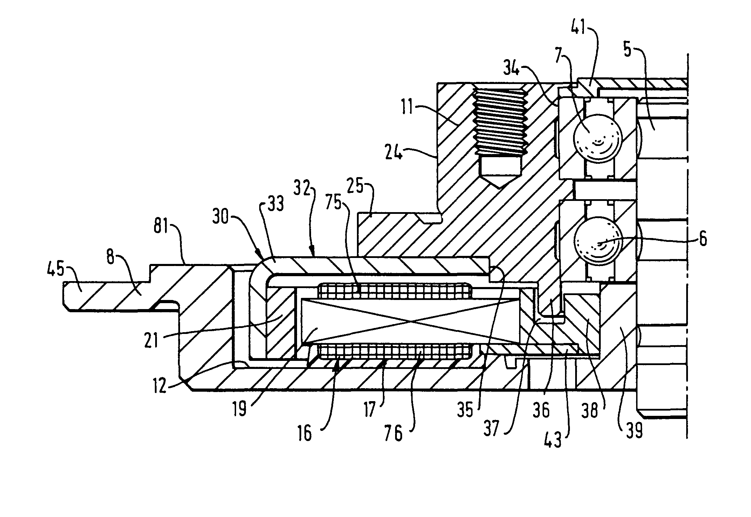

In Figure 1 there is shown in section a drive unit 1, which serves for example as a hard disk storage drive. This drive unit 1 incorporates a drive motor 30 having a substantially cup-shaped or bell-shaped rotor 33. The rotor 33 is preferably deep-drawn out of soft iron sheet and surrounds a generally annular permanent magnetic rotor magnet 21 which serves as the magnetic return path in a simultaneously provided outer rotor housing. The permanent magnetic rotor magnet 21 is fastened to the inner surface of a substantially cylindrical wall of the rotor 33. One end surface of the rotor magnet 21 terminates approximately at the edge of the cylindrical wall at the open end of the rotor 33. The opposite end surface of the rotor magnet 21 is spaced from the inner surface of the base of the rotor 33, but alternatively, may be connected thereto, for example, by a hard and tough plastics layer, for example, of a hot-setting adhesive.

The drive motor 30 has a shaft 5 which is substantially centrally mounted and fixed to a mounting flange 8. The shaft 5 is supported in axially spaced ball bearings 6, 7, the inner rings of which are rigidly mounted on the shaft 5. The outer rings of the ball bearings 6, 7 are mounted at a predetermined spacing on the inner wall 34 of the central bore of a hub 11. The hub 11 is arranged to be rotatable relative to the shaft 5 which is stationary. Preferably the hub 11 is a one-piece part made of aluminium. The hub 11 has a first projection 35 extending centrally into the base of the bell-shaped rotor 33 and is rigidly connected thereto, for example, circumferentially by sputtering or gluing. A second projection 36 of the hub 11 extends into an annular groove 37 of an annular part 38. A U-shaped gap defined between the projection 36 and the annular groove 37 acts as a labyrinth packing. The centrla bore of the annular part 38 is fixed rigidly to a hub-like projection 39 of the mounting flange 8. Stator laminations 19, preferably in the form of a grooved stack of sheets, are fixed with the winding to the radial outer side of the annular part 38. Hot-setting adhesive or a different plastics is inserted into the gap 17 between the flange-sided winding head 16 and the inner wall of a recess 12 of the flange 8. A cover disk 41 sealing the mounting of the motor from the "clean room" environment is arranged on the upper ball bearing 7.

Instead of hot-setting adhesive, other plastics can be used for the connection of motor parts as, for example, easy to work casting resins.

The mounting flange 8 comprises a cup-shaped flange having an axially extending recess defined therein into which the cup-shaped rotor 33 projects. The flange 8 has a substantially annular, axially projecting rim 81 having a substantially radially extending outer surface which extends substantially in the same plane as that containing the outer surface 32 of the base of the cup-shaped rotor 33.

The stationary shaft 5 is arranged substantially centrally of the floor of the recess of the flange 8 and is rigidly inserted within the central bore of the projection 39 of the mounting flange 8.

The base surface of the cup-shaped rotor 33 extends radially inwardly towards the shaft 5, preferably to extend over or beyond the windings 19. In this manner, the base surface of the rotor 33 provides magnetic shielding for the disk chamber adjacent the hub 11, where magnetic information disks, and reading and recording heads are housed.

The drive unit illustrated, which has a stationary shaft, has a very compact arrangement. A cover disk 41 is arranged to rotate with the hub 11, and in the illustrated embodiment forms the upper axial termination of the hub 11. The cover disk 41, which extends over the ball bearing 7, is bonded to the hub 11. In this manner, a flawless separation or seal of the upper ball bearing 7 from the "clean room" disk chamber is provided.

Under the lower ball bearing 6 and also within the rotor bell-shape, the labyrinth seal 23, 36, 37, 38 is provided. This seal or packing extends into the stator side of the flange 8. These stator-side labyrinth elements 23, 38, engage or extend around a rotor-side, ridge-like projection 36 and are supported on the hub-like projection 39 of the flange or on the flange base. Alternatively, the stator could be directly fixed to the mounting flange 8, for example, to its projection 39. In this case, a seal or packing is not required.

In the illustrated embodiment, the central stationary shaft 5 is held in the projection 39, and the one piece hub 11 extends, by way of at least the ridge-like projection 36, downwardly into the annular groove formed by the walls of elements 23 and 38. The hub 11 is arranged to carry at least one disk (not shown) on its outer cylindrical surface 24. Preferably, the one or the first disk is supported also on a generally flat shoulder 25 of the hub 11. The cup-shaped rotor 33 is held on the shoulder 35 of the hub from below, and the hub also supports the cover disk 41 that rotates with it over the upper bearing 7. The hub has at least one axially extending projection 36, which rotates in the stator-side labyrinth seal projections, and extends below the lower ball bearing 6. Between the labyrinth seal and the cover disk 41 the two ball bearings 6 and 7 are axially arranged.

The hub-like projection 39 centrally arranged of the flange 8, which holds the, for example, press-fit stationary shaft, supports the stator 19. The stator is set over the annular part 23 (including the axial groove) to which it is fastened, for example, by means of glue. This mounting can also be accomplished by injecting the entire stator block (laminated core grooved winding) together with at least the recessed part of the flange 8. Outer winding extremities 75, 76 of the stator winding may be overlaid with a casting resin seal so that there is no risk that dirt particles will move out of the stator winding region 75, 76 into the "clean room". To achieve this casting resin is injected in the crucial places well and compactly.

The mounting flange 8 is provided at its extreme outer edge with a radial projection or rim 45 which is utilised to fasten the motor 30 into disk information storage apparatus. In general, this projection 45 will be connected to a lower wall defining the "clean room", for example, by screws or a screw-connection.

The axial integration of a direct drive, external rotor, motor (with cylindrical air gap) makes possible the full use in the hub of an in-hub-motor of the radially intermediate space between the preferable stationary shaft and the output-bearing cylindrical hub wall for the storage arrangement, which can also occupy the entire available axial space reaching to the adjacent motor region.

The outer diameter of the cylindrical air gap is not dependent upon the hub diameter. This enables the stator to be more annular, because the inner stator is, so-to-speak, shifted radially away from the shaft axis. The axial projections from both the rotor and stator sides which are axially annularly interdigitated among one another for rotary motion (which could also be a larger number of ridge-like projections) are arranged radially between the stator and the shaft. This near-shaft region also receives the cover which covers the bearing space to separate it from the "clean room", as well as any arrangements for separating or sealing the inner motor space from the "clean room".

This radially extending, intermediate space between the central shaft and its support and the inner surface of the stator annulus is available because there is no need to provide a radially wider electromagnetic field with a large air gap diameter for the stator annulus, that is, for the laminated stator magnetic stock.

Embodiments of the invention have the advantage that an increased momentum requirement is producible (achievable because the air gap can be kept large, and in any case is not dependent upon hub diameter) which is dependent upon the standardization requirements for information storage disks. Since the tendency is towards ever-smaller disks, output drive diameter also tending to be smaller, so the power requirements for a drive motor placed in the hub is set at pre-existing limits.

In a drive unit as described, the diametrical moment arm of the air gap of an outer rotor motor may be increased as desired, practically at will, through radial enlargement of the axially deepened flange configuration. The deepening of the flange configuration in itself permits an axial compactness because the bearings 6, 7 and axial projection 39 are axially, rather than radially aligned.

The iron cup or rotor 33 in the motor housing provides relatively good magnetic shielding because it also acts as the magnetic return path. Generally, the cup 33 is therefore thicker than would be needed for magnetic shielding.

In this way, all of the space between the outer surface of the stationary shaft and the inner wall of the hub for the output system is put to good use.

If the outer hub diameter must become smaller, because of the ever-diminishing diameter of the information storage disks, and therewith also a diminishing size above a minimum size of a central hole must be set, there is virtually no alternative to the one-piece hub 11 as described above, to be made out of low-remanence magnetic material.

A circuit board 43 is supported on the base of the recess of the flange 8. The circuit board 43 has a printed circuit thereon, and may form part of the connection of the stator-side casting resin seal. The motor thus provided, which boasts a large ratio or air gap diametrical dimension to axial length, is, for example, a brushless outer rotor motor with three strings provided for a three-or-six pulse drive, or for a two- or one-pulse drive provided, such as that described in the following patent documents DE-05 22 25 442; (offenlagungschaft) and DE-PS 23 46 380 and/or DE-PS 23 14 259.

The invention is especially suitable for motors whose diameter D is large compared to the overall axial length L, that is, D/L amounts to at least 2.

It will be appreciated that modifications and variations to the invention as described and illustrated can be made within the scope of the appended claims.

## Claims

1. A hard disk storage drive incorporating a drive motor (30) having a hub (11), and one or more information storage disks carried by said hub, the hard disk storage drive having a clean room chamber adjacent the hub (11) in which the information storage disks, and read and recording heads therefor, are housed, the hub having a cylindrical portion (24) which carries at least one information storage disk, with the one or a first disk supported on a flat, radially extending, shoulder (25) of the hub, the drive motor (30) being sealed off from the clean room disk chamber, and the drive motor (30) comprising a shaft (5) defining a central axis and arranged to support said hub for rotation by the motor, and a stator (19) and a rotor (33) defining a cylindrical air gap therebetween, wherein a cup-shaped mounting flange (8) for supporting said stator is arranged coaxially relative to said central axis, said mounting flange (8) having an axially extending recess (12) defined therein, wherein said rotor (33) projects into said recess (12), and carries a annular permanent magnetic rotor magnet (21), wherein said air gap defined between said rotor (33) and said stator (19) is axially extending and within said recess (12), and wherein the stator (19) is supported within said recess (12), wherein said rotor (33) is contiguous with said hub (11) and the permanent magnetic rotor magnet (21) is located within said recess (12) axially below said flat shoulder (25) of the hub (11), and wherein seal means (36, 37, 38) are arranged between the hub (11 ) and the stator (19).

2. A hard disc storage drive as claimed in Claim 1, wherein the magnetic components of the rotor (33) and stator (19) are arranged symmetrically to one another.

3. A hard disc storage drive as claimed in Claim 1 or Claim 2, wherein the stator (19) carries a winding arranged substantially coaxially relative to said central axis, and the rotor (33) is arranged coaxially relative to said central axis and to be external relative to, and to substantially surround, said stator winding, and wherein said shaft (5) extends axially beyond said mounting flange and is arranged to support said hub (11) for rotation by said rotor (33).

4. A hard disc storage drive as claimed in Claim 3, wherein said shaft (5) is stationary.

5. A hard disc storage drive as claimed in Claim 3 or Claim 4, wherein said hub (11) comprises a cup-shaped rotor of magnetic material facing into the recess (12) of the mounting flange (8) and supporting the outer rotor (33).

6. A hard disc storage drive as claimed in Claim 5, wherein the stator (19) is supported within said recess (12) within the limits of the outer rotor.

7. A hard disc storage drive as claimed in any preceding claim, wherein bearing means (6, 7) for the hub are arranged on the shaft (5), and wherein the stator (19) is fitted to a bearing support part for the rotor shaft bearing (6, 7) and wherein the rotor (33) is arranged to directly drive said hub (11).

8. A hard disc storage drive as claimed in any preceding claim, wherein the rotor (33) comprises a cup-shaped rotor carrying the annular permanent magnetic rotor magnet (21) which is arranged to surround the stator (19) and define said axially extending air gap therewith, said cup-shaped rotor and permanent magnetic rotor magnet effectively covering the stator, and wherein the flange (8) comprises an axially offset mounting rim (45).

9. A hard disc storage drive as claimed in any preceding claim, wherein said hub (11) comprises support means (24) for the information storage disks, and a cover disc (41) is provided which is rotatable with the hub, and wherein said rotor is shaped to form, or carries, magnetic shielding means for shielding the stator from said support means and from the disk chamber.

10. A hard disc storage drive as claimed in any preceding claim, wherein said seal means (36, 37, 38) comprise elements radially within the stator (19) and axially offset relative to bearing means (6, 7) for said hub (11) toward the flange (8).

11. A hard disc storage drive as claimed in any preceding claim, wherein bearing means are provided for said hub and comprise two or more rotor shaft bearings (6, 7) axially spaced along said shaft (5).

12. A hard disc storage drive as claimed in any preceding claim, wherein said generally flat shoulder is formed on a disk-bearing element of aluminium which has a lower surface, and wherein said rotor (33) comprises a cup-shaped rotor of magnetic material which is held firmly to said lower surface of said disk-bearing element (25).

13. A hard disc storage drive as claimed in any preceding claim, wherein said shaft (5) is stationary and has first and second approximately comparable axial lengths comprising substantially its whole length, said first length being the length of the portion of the shaft mounted in an axially extending recess (12) of said flange (8), and said second length being the length of the shaft upon which bearings means (6, 7) for said hub are mounted and which is substantially occupied thereby.

14. A hard disc storage drive as claimed in any preceding claim, wherein the mounting flange (8) has a relatively large area, and the stator (19) with a winding is connected rigidly to the stationary shaft (5), and the rotor (33) is rotatable relative to said shaft.

15. A hard disc storage drive as claimed in any preceding claim, wherein the drive motor (30) further comprises a cover disc (41) sealing the mounting of the motor from the clean room disk chamber.

16. A hard disc storage drive as claimed in any preceding claim, wherein a conductor plate and/or a shielding ring (17) is located between said mounting flange (8) and the winding (16) of the stator, and for example, is or are partially or entirely cast or moulded with plastics on both sides.

17. A hard disc storage drive as claimed in any preceding claim, wherein parts of the preferably, bell-shaped rotor (33) are connected to each other by a plastics layer, wherein the layer is applied point-like, annularly, radially, or sheetlike.

18. A hard disc storage drive as claimed in any preceding claim, wherein the rotor surface is connected to the rotor magnet (21) by a plastics layer.

## Patentansprüche

1. Festplattenspeicher-Laufwerk, das einen Antriebsmotor (30) beinhaltet, der eine Nabe (11) hat, und eine oder mehr Informationsspeicherscheiben, die von der Nabe getragen sind, wobei das Festplattenspeicher-Laufwerk eine Reinraumkammer benachbart der Nabe (11) hat, in der die Informationsspeicherscheiben und die Lese- und Aufzeichnungsköpfe für diese untergebracht sind, wobei die Nabe einen zylindrischen Abschnitt (24) hat, der mindestens eine Informationsspeicherscheibe trägt, wobei die eine oder eine erste Scheibe an einer flachen, sich radial erstreckenden Schulter (25) der Nabe gestützt ist, wobei der Antriebsmotor (30) gegenüber der Reinraum-Scheiben-Kammer abgedichtet ist, und der Antriebsmotor (30) einen Schaft (5) aufweist, der eine zentrale Achse definiert und so ausgebildet ist, dass sie die Nabe für eine Drehung durch den Motor stützt, und einen Stator (19) und einen Rotor (33), die zwischen sich einen zylindrischen Luftspalt begrenzen, wobei ein becherförmiger Montageflansch (8) zum Stützen des Stators koaxial relativ zu der zentralen Achse angeordnet ist, wobei der Montageflansch (8) eine sich axial erstreckende Aussparung (12) hat, die in ihm definiert ist, wobei der Rotor (33) in die Aussparung (12) vorragt, und einen ringförmigen permanent magnetischen Rotormagnet (21) trägt, wobei der Luftspalt, der zwischen dem Rotor (33) und dem Stator (19) begrenzt ist, sich axial erstreckt und sich innerhalb der Aussparung (12) befindet, und wobei der Stator (19) innerhalb der Aussparung (12) gestützt ist, wobei der Rotor (33) benachbart zu der Nabe (11) ist und der permanent magnetische Rotormagnet (21) innerhalb der Aussparung (12) axial unterhalb der flachen Schulter (25) der Nabe (11) angeordnet ist, und wobei Dichtmittel (36, 37, 38) zwischen der Nabe (11) und dem Stator (19) angeordnet sind.

2. Festplattenspeicher-Laufwerk nach Anspruch 1, wobei die magnetischen Komponenten des Rotors (33) und Stators (19) symmetrisch zueinander angeordnet sind.

3. Festplattenspeicher-Laufwerk nach Anspruch 1 oder 2, bei dem der Stator (19) eine Wicklung trägt, die im Wesentlichen koaxial relativ zu der zentralen Achse angeordnet ist, und der Rotor (33) koaxial relativ zu der zentralen Achse angeordnet ist, so, dass er sich außerhalb von der Statorwicklung befindet und diese im Wesentlichen umgibt, und wobei der Schaft (5) sich in Axialrichtung über den Montageflansch hinaus erstreckt und so ausgebildet ist, dass er die Nabe (11) für eine Rotation durch den Rotor (33) stützt.

4. Festplattenspeicher-Laufwerk nach Anspruch 3, bei dem der Schaft (5) stationär ist.

5. Festplattenspeicher-Laufwerk nach Anspruch 3 oder 4, bei dem die Nabe (11) einen becherförmigen Rotor aus magnetischem Material aufweist, der in die Aussparung (12) des Montageflanschs (8) hinein gewandt ist und den äußeren Rotor (33) stützt.

6. Festplattenspeicher-Laufwerk nach Anspruch 5, bei dem der Stator (19) innerhalb der Aussparung (12) innerhalb der Grenzen des äußeren Rotors gestützt ist.

7. Festplattenspeicher-Laufwerk nach einem der vorhergehenden Ansprüche, bei dem Lagereinrichtungen (6) für die Nabe an dem Schaft (5) angeordnet sind, und wobei der Stator (19) an einem tragenden Stützteil für das Rotorschaftlager (6, 7) montiert ist, und wobei der Rotor (33) so ausgebildet ist, dass er direkt die Nabe (11) antreibt.

8. Festplattenspeicher-Laufwerk nach einem der vorhergehenden Ansprüche, wobei der Rotor (33) einen becherförmigen Rotor aufweist, der den ringförmigen permanent magnetischen Rotormagnet (21) trägt, der so ausgebildet ist, dass er den Stator (19) umgibt und mit diesem den sich axial erstreckenden Luftspalt begrenzt, wobei der becherförmige Rotor und permanent magnetische Rotormagnet wirksam den Stator überdecken, und wobei der Flansch (8) einen in Axialrichtung versetzten Montagerand (45) aufweist.

9. Festplattenspeicher-Laufwerk nach einem der vorhergehenden Ansprüche, wobei die Nabe (11) Stützmittel aufweist für die Informationsspeicherscheiben, und eine Abdeckscheibe (41) vorgesehen ist, die mit der Nabe drehbar ist, und wobei der Rotor so geformt ist, dass er magnetische Abschirmeinrichtungen zum Abschirmen des Stators von der Stützeinrichtung und von der Scheibenkammer bildet, oder die Abschirmeinrichtungen trägt.

10. Festplattenspeicher-Laufwerk nach einem der vorhergehenden Ansprüche, wobei die Dichtmittel (36, 37, 38) radial innerhalb des Rotors (19) und in Axialrichtung versetzt relativ zu Lagermitteln (6) für die Nabe (11) in Richtung auf den Flansch (8) Elemente aufweisen.

11. Festplattenspeicher-Laufwerk nach einem der vorhergehenden Ansprüche, wobei Lagermittel für die Nabe vorgesehen sind und zwei oder mehr Rotorschaftlager (6,7) längs der Achse (5) axial beabstandet aufweisen.

12. Festplattenspeicher-Laufwerk nach einem der vorhergehenden Ansprüche, wobei die im Wesentlichen flache Schulter an einem scheibentragenden Element aus Aluminium gebildet ist, das eine untere Fläche hat, und wobei der Rotor (33) einen becherförmigen Rotor aus magnetischem Material aufweist, der fest an der genannten unteren Fläche des scheibentragenden Elements (25) gehalten ist.

13. Festplattenspeicher-Laufwerk nach einem der vorhergehenden Ansprüche, wobei der Schaft (5) stationär ist und ungefähr vergleichbare erste und zweite axiale Längenabschnitte hat, die im Wesentlichen seine gesamte Länge einnehmen, wobei der erste Längenabschnitt die Länge des Abschnitts des Schaftes ist, die in einer sich axial erstreckenden Aussparung (12) des Flansches (8) montiert ist, und der zweite Längenabschnitt die Länge des Schafts ist, an der Lagermittel (6) für die Nabe montiert sind und der dadurch im Wesentlichen besetzt ist.

14. Festplattenspeicher-Laufwerk nach einem der vorhergehenden Ansprüche, wobei der Montageflansch (8) eine relativ große Fläche hat und der Stator (19) mit einer Wicklung fest an dem stationären Schaft (5) befestigt ist, und der Rotor (33) relativ zu dem Schaft drehbar ist.

15. Festplattenspeicher-Laufwerk nach einem der vorhergehenden Ansprüche, wobei der Antriebsmotor (30) weiterhin eine Abdeckscheibe (41) aufweist, die die Montage des Motors von der Reinraumscheibenkammer abdichtet.

16. Festplattenspeicher-Laufwerk nach einem der vorhergehenden Ansprüche, wobei eine Leiterplatte und/oder ein Abschirmring (17) zwischen dem Montageflansch (8) und der Wicklung (16) des Stators angeordnet ist, und, zum Beispiel, zum Teil oder ganz gegossen oder geformt ist / sind mit Kunststoff an beiden Seiten.

17. Festplattenspeicher-Laufwerk nach einem der vorhergehenden Ansprüche, wobei Teile des, vorzugsweise, glockenförmigen Rotors (33) miteinander durch eine Kunststoffschicht verbunden sind, wobei die Schicht punktförmig, ringförmig, radial oder blattförmig ist.

18. Festplattenspeicher-Laufwerk nach einem der vorhergehenden Ansprüche, wobei die Rotorfläche mit dem Rotormagnet (21) durch eine Kunststoffschicht verbunden ist.

## Revendications

1. Une unité de stockage sur disque dur, incorporant un moteur d'entraînement (30) ayant un moyeu (11), et un ou plusieurs disques de stockage d'information supportés par ledit moyeu, l'unité de stockage sur disque dur ayant une chambre formant salle propre, adjacente au moyeu (11 ), dans laquelle les disques de stockage d'information et les têtes de lecture et d'enregistrement pour ceux-ci sont logés, le moyeu ayant une partie (24) cylindrique portant au moins un disque de stockage d'information, le ou un premier disque étant supporté sur un épaulement (25) plat, s'étendant radicalement, du moyeu, le moteur d'entraînement (30) étant enfermé hermétiquement vis-à-vis de la chambre à disques formant salle propre, et le moteur d'entraînement (30) comprenant un arbre (5) définissant un axe central et agencé pour supporter ledit moyeu pour permettre la rotation par le moteur, et un stator (19) et un rotor (33) définissant entre eux un intervalle d'air, dans laquelle une bride de montage (8) en forme de coupelle, devant supporter ledit stator, est agencée coaxialement par rapport audit axe central, ladite bride de montage (8) ayant une cavité (12) s'étendant axialement définie en son sein, dans laquelle ledit rotor (33) fait saillie dans ladite cavité (12) et porte un aimant de rotor (21) annulaire, réalisé en tant qu'aimant permanent, dans laquelle ledit intervalle d'air, défini entre ledit rotor (33) et ledit stator (19), s'étend axialement et à l'intérieur de ladite cavité (12), et dans laquelle le stator (19) est supporté à l'intérieur de ladite cavité (12), dans laquelle ledit rotor (33) est contiguë audit moyeu (11) et l'aimant de rotor (21), réalisé en tant qu'aimant permanent, est logé dans ladite cavité (12), axialement au-dessous dudit épaulement (25) plat du moyeu (11), et dans laquelle lesdits moyens d'étanchéité (36, 37, 38) sont agencés entre le moyeu (11 ) et le stator (19).

2. Une unité de stockage sur disque dur selon la revendication 1, dans laquelle les composants magnétiques du rotor (33) et du stator (19) sont agencés symétriquement les uns aux autres.

3. Une unité de stockage sur disque dur selon la revendication 1 ou la revendication 2, dans laquelle le stator (19) porte un enroulement agencé sensiblement coaxialement par rapport audit axe central, et le rotor (33) est agencé coaxialement par rapport audit axe central et de façon à être externe à, et entourer sensiblement ledit enroulement de stator, et dans lequel ledit arbre (5) s'étend axialement au-dessous de ladite bride de montage et est agencé pour supporter ledit moyeu (11) pour permettre la rotation par ledit rotor (33).

4. Une unité de stockage sur disque dur selon la revendication 3, dans laquelle ledit arbre (5) est stationnaire.

5. Une unité de stockage sur disque dur selon la revendication 3 ou la revendication 4, dans laquelle ledit moyeu (11) comprend un rotor en forme de coupelle réalisé en matériau magnétique, placé face à l'intérieur de la cavité (12) du moteur de la bride de montage (10) et supportant le rotor extérieur (33).

6. Une unité de stockage sur disque dur tel que défini à la revendication 5, dans laquelle le stator (19) est supporté à l'intérieur de ladite cavité (12) dans les limites du rotor extérieur.

7. Une unité de stockage sur disque dur selon l'une quelconque des revendications précédentes, dans laquelle lesdits moyens formant palier (6, 7) prévus pour le moyeu sont agencés sur l'arbre (5), et dans laquelle le stator (19) est monté sur une partie support de palier, prévue pour le palier d'arbre de rotor (6, 7) et dans laquelle le rotor (33) est agencé pour entraîner directement ledit moyeu (11 ).

8. Une unité de stockage sur disque dur selon l'une quelconque des revendications précédentes, dans laquelle le rotor (33) comprend un rotor en forme de coupelle, portant l'aimant de rotor (21) annulaire réalisé en tant qu'aimant permanent, agencé pour entourer le stator (19) et définir avec lui ledit intervalle d'air s'étendant axialement, ledit rotor en forme de coupelle et ledit aimant de rotor réalisé en tant qu'aimant permanent couvrant efficacement le stator, et dans laquelle la bride (8) comprend une bordure de montage (45) décalée axialement.

9. Une unité de stockage sur disque dur selon l'une quelconque des revendications précédentes, dans laquelle ledit moyeu (11) comprend des moyens support (24) pour les disques de stockage d'information, et un disque de couverture (41) est prévu, susceptible de tourner avec le moyeu, et dans laquelle ledit rotor est conformé pour constituer, ou porte, des moyens d'écrantage magnétiques afin d'écranter le stator vis-à-vis desdits moyens support et vis-à-vis de ladite chambre à disques.

10. Une unité de stockage sur disque dur selon l'une quelconque des revendications précédentes, dans laquelle lesdits moyens d'étanchéité (36, 37, 38) comprennent des éléments placés radialement à l'intérieur du stator (19) et axialement décalés par rapport aux moyens formant palier (6, 7) prévus pour ledit moyeu, le décalage étant en direction de la bride (8).

11. Une unité de stockage sur disque dur selon l'une quelconque des revendications précédentes, dans laquelle des moyens formant palier sont prévus pour ledit moyeu et sont formés d'un ou plusieurs paliers d'arbre de rotor (6, 7) espacés axialement le long dudit arbre (5).

12. Une unité de stockage sur disque dur selon l'une quelconque des revendications précédentes, dans laquelle ledit épaulement globalement plat est formé sur un élément formant palier de disques, réalisé en aluminium, ayant une surface inférieure, et dans laquelle ledit rotor (33) comprend un rotor en forme de coupelle, réalisé en un matériau magnétique, maintenu fermement sur ladite surface inférieure dudit élément formant palier de disque (25).

13. Une unité de stockage sur disque dur selon l'une quelconque des revendications précédentes, dans laquelle ledit arbre (5) est stationnaire et présente des premières et deuxièmes longueurs axiales à peu près comparables, faisant sensiblement la totalité de sa longueur, ladite première longueur étant la longueur de la partie de l'arbre montée dans ladite cavité (12), s'étendant axialement, de ladite bride (8), et ladite deuxième longueur étant la longueur de l'arbre sur lequel sont montés lesdits moyens formant palier (6, 7) pour ledit moyeu et qui est de cette manière sensiblement occupée par ceux-ci.

14. Une unité de stockage sur disque dur selon l'une quelconque des revendications précédentes, dans laquelle la bride de montage (8) présente une aire relativement grande, et le stator (19) muni d'un enroulement est relié rigidement à l'arbre stationnaire (5) et le rotor (33) est susceptible de tourner par rapport audit arbre.

15. Une unité de stockage sur disque dur selon l'une quelconque des revendications précédentes, dans laquelle le moteur d'entraînement (30) comprend en outre un disque de couverture (41) fermant hermétiquement le montage du moteur par rapport à la chambre à disques du type salle propre.

16. Une unité de stockage sur disque dur selon l'une quelconque des revendications précédentes, dans laquelle la plaque conductrice et/ou l'anneau d'écrantage (17) est/sont placé(s) entre ladite bride de montage (8) et l'enroulement (16) du stator, et par exemple, est ou sont partiellement noyé(s) lors d'une coulée ou d'un moulage, par de la matière synthétique, sur les deux côtés.

17. Une unité de stockage sur disque dur selon l'une quelconque des revendications précédentes, dans laquelle des parties du rotor (33) de préférence en forme de cloche sont reliées les unes aux autres par une couche en matières synthétiques, dans laquelle la couche est appliquée de façon ponctuelle, annulaire, radiale, ou en feuille.

18. Une unité de stockage sur disque dur selon l'une quelconque des revendications précédentes, dans laquelle la surface de rotor est reliée à l'aimant de rotor (21) par une couche en matière synthétique.
